Europäisches Patentamt

European Patent Office

Office européen des brevets

(11) Veröffentlichungsnummer: **0 350 008**

**A2**

(12) **EUROPÄISCHE PATENTANMELDUNG**

(21) Anmeldenummer: **89112275.6**

(22) Anmeldetag: **05.07.89**

(51) Int. Cl.⁴: **B62D 13/02**

(30) Priorität: **05.07.88 DE 3822730**

(43) Veröffentlichungstag der Anmeldung:
**10.01.90 Patentblatt 90/02**

(84) Benannte Vertragsstaaten:
**AT BE CH DE FR GB IT LI NL SE**

(71) Anmelder: **WIEDENMANN GMBH**

**D-7901 Rammingen Krs. Ulm(DE)**

(72) Erfinder: **Der Erfinder hat auf seine Nennung verzichtet**

(74) Vertreter: **Flügel, Otto, Dipl.-Ing.**
**Richard-Strauss-Strasse 56**
**D-8000 München 80(DE)**

(54) **Bodenflächen-Bearbeitungsgerät.**

(57) Bodenflächen-Bearbeitungsgerät mit einem Gespann aus einer Zugmaschine und einem an diese über eine Deichsel angeschlossenen Anhänger, der zwei bei Geradeausfahrt um fluchtend ausgerichtete Laufachsen drehende, gegenüber dem Anhängerchassis in etwa horizontaler Ebene verschwenkbare Räder aufweist, welches Gerät zur Eignung des Durchfahrens auch enger Kurven in schmalen Durchfahrtsbereichen derart ausgestaltet ist, daß an der Zugmaschine ein Ausleger fest angeordnet ist, der über ein gelenkig zwischengeschaltetes Lenkgestänge mit den schwenkbaren Rädern des Anhängers diese bei Kurvenfahrt in Richtung des Kurvenverlaufs einstellend in Verbindung steht.

EP 0 350 008 A2

## BODENFLÄCHEN-BEARBEITUNGSGERÄT

Die Erfindung bezieht sich auf ein Bodenflächen-Bearbeitungsgerät mit den Merkmalen des Oberbegriffes des Anspruches 1.

Es handelt sich dabei um einachsige Anhänger, die an einer Zugmaschine über eine normale kraftübertragende Anhängung dergestalt angeschlossen sind, daß die Räder des Anhängers gegenüber denjenigen der Zugmaschine tragend arbeiten. Die Verbindung zwischen der Zugmaschinenkupplung und der Deichsel ist also ein Gelenk, das sowohl in horizontaler wie in vertikaler Richtung arbeitet, ein sphärisches Gelenk also, wie es ein Kugelgelenk darstellt.

Bei einem einachsigen Anhänger mit starr angeordneter Laufradachse ergibt sich die bekannte Schleppkurve, d.h. bei einer Kurvenfahrt läuft der Anhänger zum kurveninneren Raum hin versetzt hinter dem Schleppfahr zeug her. Dies führt zu Problemen, wenn das Bodenflächen-Bearbeitungsgerät enge Durchfahrten in Kurvenfahrt passieren muß, wie dies beispielsweise bei baum-oder strauchbewachsenem Gelände der Fall ist.

Weiterhin gibt es an der Zugmaschine starr angebrachte Anhänger, bei denen die beiden Stützräder frei schwenkbar nachlaufen. Hier ergibt sich das Problem der zum Kurveninneren hin versetzten Schleppkurve des Anhängers nicht, dafür ist aufgrund der starren Anhängeranordnung die gesamte Längsausdehnung von Zugmaschine und Anhänger als starre Einheit größer und behindert insoweit ebenfalls eine enge Kurvendurchfahrt.

Der Erfindung liegt die Aufgabe zugrunde, ein Bodenflächen-Bearbeitungsgerät mit einem Gespann aus einer Zugmaschine und einen an diese über eine Deichsel angeschlossenen einachsigen Anhänger der eingangs genannten Art zur Verfügung zu stellen, mit der auch enge Kurven in schmalen Durchfahrtsbereichen durchfahren werden können.

Ausgehend von einem Bodenflächen-Bearbeitungsgerät mit den Merkmalen des Oberbegriffes des Anspruches 1 wird diese Aufgabe erfindungsgemäß durch dessen kennzeichnende Merkmale gelöst.

Durch die erfindungsgemäße Ausbildung eines Auslegers an der Zugmaschine und eines zwischengeschalteten Lenkgestänges, das diesen Ausleger mit der Schwenkeinrichtung für die Räder verbindet, wird erreicht, daß die versetzte Stellung der Zugmaschine gegenüber dem Anhänger bei Kurvenfahrt auf die Räder des Anhängers derart übertragen wird, daß diese in Richtung des durch die Zugmaschine eingeschlagenen Kurvenverlaufes folgen. Damit wird die bei Anhängern mit starrer Achse übliche zum Kurveninneren der Zugmaschinenbahn versetzte Schleppkurve des Anhängers vermieden oder doch zumindest in Richtung auf die Kurvenbahn der Zugmaschine hin versetzt, so daß sich insgesamt im Rahmen einer Kurvenfahrt ein Nachlauf des Anhängers ergibt, der es ermöglicht, daß das Gespann durch entsprechend eng bemessenen Raum hindurchfahren kann.

Es gibt leichtere und schwerere Anhänger, letztere vielfach mit gebremsten Hinterrädern, während bei leichten Anhängern sämtliche Kräfte, nämlich die Zugkräfte und die Bremskräfte, von der Zugmaschine ausschließlich aufgebracht und über die gelenkige Deichselverbindung auf den Anhänger übertragen werden bzw. umgekehrt. Diesen Verhältnissen entsprechend können verschiedene Ausführungen des Lenkgestänges und des Auslegers vorgesehen werden, ohne daß die vorerwähnten unterschiedlichen Gewichte und/oder Bremsverhältnisse eine Einschränkung der jeweiligen Lösung auf eine oder eine beschränkte Anzahl dieser möglichen Anhängerausführungen bedeuten.

So besteht eine erste bevorzugte Ausführung insbesondere für Anhänger mit gebremsten Hinterrädern bzw. höherem Gewicht als starre Achse bzw. derart auszubilden, daß die Laufradachsen in jeder Verschwenkstellung in fluchtender Ausrichtung zueinander bleiben. Diese Achskonstruktion ist an einem Lenkrahmen befestigt, der über einen Lenkkranz um eine etwa vertikale, in der vertikalen Längsmittelebene des Anhängers gelegene Drehachse verschwenkbar an dem Anhängerchassis abgestützt ist. An dem Lenkrahmen ist wenigstens ein Gelenk angeordnet, dessen Gelenkachse etwa vertikal verläuft und von der Drehachse des Lenkkranzes seitlich beabstandet ist. Dieses Gelenk ist über eine einoder mehrteilige Gelenkstangenverbindung an ein vom Zugfahrzeug abstehendes Gelenkende des Auslegers angeschlossen. So wie der normale Deichselgelenkanschluß zwischen der Zugmaschine und dem Anhängerchassis als sphärisches Gelenk, beispielsweise Kugelgelenk ausgebildet ist, weist auch die Gelenkverbindung zwischen dem Gelenkende des Auslegers der Zugmaschine und dem vom Anhänger abgewandten Ende der Gelenkstangenverbindung eines sphärische Beweglichkeit auf, also eine in horizontaler Ebene und in vertikaler Ebene, was beispielsweise ebenfalls durch ein Kugelgelenk oder äquivalente Gelenkausbildungen erreicht werden kann. Diese Gelenkausbildung am Ende des Auslegers gilt für alle Ausführungsformen, damit der Anhänger insoweit unabhängig von der Stellung der Zugmaschine jeweils auf seinen eigenen Rädern abgestützt ist.

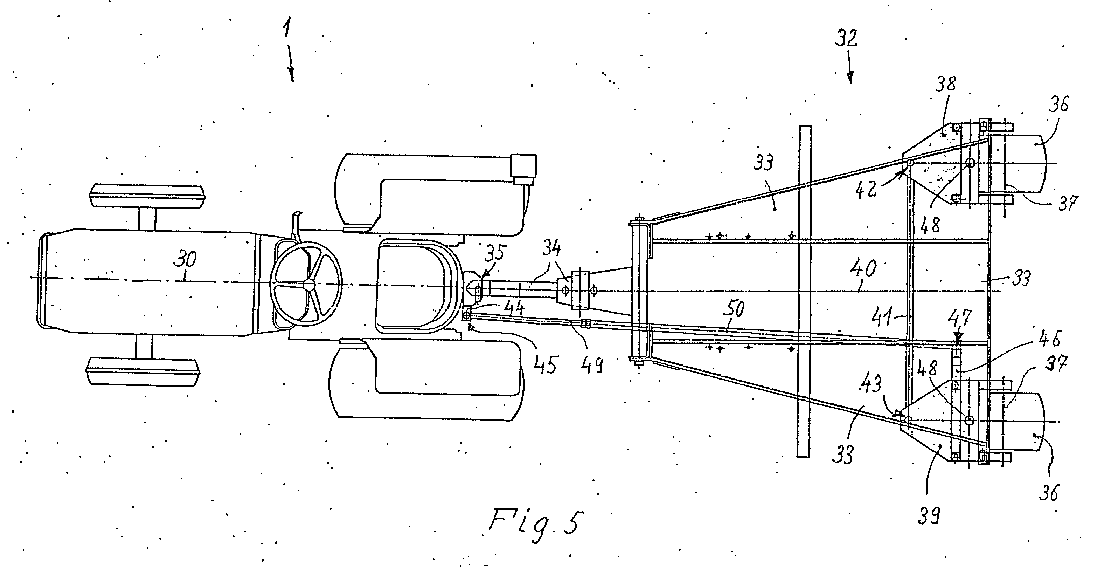

In einer bevorzugten Ausführung wird im in Vorwärtsfahrtrichtung vor dem Lenkrahmen gelegenen Bereich des Anhängerchassis eine Gelenkarmausbildung drehbar gelagert, dessen zur selben Seite wie das Gelenk des Gelenkrahmens hin abragendes Ende mit diesem über eine Steuerstange gelenkig verbunden ist. Die Hebelgelenkausbildung weist einen zweiten Arm auf, der in Geradeausfahrtrichtung nach vorne hin abragt und mit seinem abragenden Ende an das von der Zugmaschine abragende Ende des Auslegers gelenkig angeschlossen ist, welcher Ausleger sich in der vertikalen Längsmittelebene der Zugmaschine in Rückwärtsfahrtrichtung erstreckt. Eine solche Lenkgestängeausbildung kann auch symetrisch vorgesehen sein, es sind demnach zu beiden Seiten von der Drehachse des Lenkrahmens bzw. der vertikalen Längsmittelebene des Anhängers beabstandete Gelenke vorgesehen, die jeweils mit einer Steuerstange an jeweils ein Ende der Gelenkarmausbildung angeordnet sind, welche Enden in dieselbe Richtung wie die jeweils damit verbundenen Gelenke abragen. Eine solche Ausbildung ergibt sich aus dem ersten in den Figuren wiedergegebenen Ausführungsbeispiel, anhand dessen auch die einseitige Ausbildung bei L-förmiger Hebelarmgestaltung ersichtlich ist, wenn man sich nur eine Seite des Anhängers und der Hebelarmausbildung als L-förmig vor Augen hält. Es ist darüber hinaus möglich, die Gelenkarmausbildung und deren Schwenklagerung im Bereich zwischen Deichsel und Lenkrahmen zu vermeiden, in dem man das wenigstens eine seitlich versetzte Gelenk des Lenkrahmens mit dem frei abragenden Ende eines an dem Traktor befestigten Auslegers verbindet, der sich von der vertikalen Längsmittelebene des Traktors zu der anderen Seite hin erstreckt, so daß sich eine dieses Gelenkende des Auslegers mit dem vorerwähnten Gelenk verbindende Steuerstange von der einen Seite zur anderen hin unter Kreuzung der vertikalen Längsmittelebene des Anhängers erstreckt. Es wird also eine ähnliche Anordnung des Auslegers vorgesehen, wie sie im Zusammenhang mit dem zweiten Ausführungsbeispiel gemäß Figur 5 der Figurenbeschreibung wiedergegeben ist, lediglich die Steuerstange erstreckt sich zur anderen Seite der vertikalen Längsmittelebene des Anhängers hin. Selbstverständlich ist es möglich, auch diese Anordnung symetrisch auszuführen, also mit Hilfe zweier gleichmäßig zu beiden Seiten der vertikalen Längsmittelebene des Anhängers angeordneten Gelenke und eines entsprechend doppelarmig ausgebildeten Auslegers unter gelenkiger Verbindung mittels zweier Steuerstangen, die sich und die vertikale Längsmittelebene des Anhängers kreuzend angeordnet sind.

Insbesondere bei leichteren und/oder nicht selbst mit einer Bremseinrichtung versehenen Anhängern besteht eine bevorzugte Ausführung darin, daß die beiden Räder jeweils an Konsolen gehalten sind, die um vertikal angeordnete Achsen verschwenkbar an dem Anhängerchassis gelagert sind, und zwar symetrisch zur vertikalen Längsmittelebene des Anhängers zu deren beiden Seiten angeordnet. In einer bevorzugten Ausführungsform ist eine der Konsolen mit einer seitlich von der Schwenklagerung der Konsole zur vertikalen Längsmittelebene hin abragend angeordneten Gelenkstelle versehen, gegebenenfalls unter Zwischenschaltung eines Mitnehmers, die über eine Steuerstange mit dem seitlich abragenden Gelenkende eines Auslegers verbunden ist, der an der Zugmaschine seitlich von deren vertikaler Längsmittelebene abragend angeordnet ist, wie dies im Zusammen hang mit Figur 5 der Ausführungsbeispiele dargestellt und abgehandelt wird. Dabei sind die beiden Konsolen an vor ihren Drehachsen angeordneten Gelenkstellen mittels einer Spurstange gelenkig verbunden, so daß die Verschwenkstellungen beider Konsolen jeweils winkelsynchronisiert sind. Anstelle der Spurstange kann man auch eine Anordnung mit zwei an den Konsolen bzw. zwischengeschalteten Mitnehmern angeordnete Gelenke vorsehen, die jeweils über eine Steuerstange mit einem Auslegerende verbunden sind, welcher Ausleger dann zweiseitig zu beiden Seiten der Längsmittelebene der Zugmaschine abragend angeordnet ist. Ordnet man das Gelenk einer Konsole nicht zwischen deren Schwenkachse und der vertikalen Längsmittelebene des Anhängers an, sondern von dieser fortgerichtet über die Drehachse hinaus, dann muß man eine Auslegeanordnung und eine Steuerstange einsetzen, die die vertikale Längsmittelebene des Anhängers kreuzt.

Eine weitere, interessante Ausgestaltung der Erfindung besteht darin, die Räder des Anhängers in eine der Kurvenrichtung der Zugmaschine entgegengesetzte Verschwenklage zu überführen. Das bedeutet, daß Zugmaschine und Anhänger in gewisser Weise parallel versetzt werden, was bei Anlauf einer Parkstellung oder dergleichen von Vorteil sein kann. Zu diesem Zwecke ist es bei dem im Zusammenhang mit einer Lenkrahmenausbildung nach dem ersten Ausführungsbeispiel vorstehend geschilderten Ausführung des Lenkgestänges derart, daß ein Gelenk des Lenkrahmens über eine die vertikale Längsmittelebene des Anhängers kreuzende Steuerstange mit dem Gelenkende eines Auslegers gelenkig verbunden ist, der an der Zugmaschine von deren vertikaler Längsmittelebene seitlich abragend befestigt ist, lediglich erforderlich, diesen Ausleger - beispielsweise in einer vertikalen, leicht schräg zur vertikalen Längsmittelebene der Zugmaschine verlaufenden Ebene - derart verschwenkbar anzuordnen, daß das Gelenkende des Auslegers auf die andere Seite der vertikalen Längsmittelebene der Zugmaschine gelangt, vorzugsweise mit symetrischem Abstand von dieser Ebene. Die leichte Schrägstellung der Verschwenkebene des Auslegers ist erforderlich, um bei Geradeausfahrt unter Berücksichtigung einer gleichbleibenden Länge der Steuerstange die entsprechende Geradeausrichtung der Räder beizubehalten. Jeder Wechsel der Auslegerstellung, der dessen Gelenkende durch die vertikale Längsmittelebene der Zugmaschine von deren eine Seite auf die andere bewirkt, führt zu einer Umkehr der Verschwenkstellung der Räder des Anhängers in bezug auf die Kurvenstellung der Lenkräder der Zugmaschine. Eine solche Auslegerverschwenkung kann vom Sitz der Zugmaschine aus über eine einfache handbediente Hebelanordnung erreicht werden. Selbstverständlich ist es grundsätzlich auch möglich, eine solche Lenkstellungsumkehr der Räder des Anhängers in bezug auf die Lenkräder der Zugmaschine dadurch vorzunehmen, daß man die anhängerseitige Anlenkung der Steuerstange entsprechend zur anderen Seite der vertikalen Längsmittelebene des Anhängers hin verlagert. Eine solche Verschwenkstellungsumkehr läßt sich auch bei symetrischer Anordnung, d.h. bei zwei Gelenken und einem doppelarmigen Ausleger sowie zwei Steuerstangen verwirklichen.

Diese und weitere bevorzugte Ausführungsformen ergeben sich aus den Unteransprüchen.

Die Erfindung wird anhand der in der Zeichnung wiedergegebenen Ausführungsbeispiele nachstend näher erläutert. Es zeigen:

Figuren 1 und 2 eine schematische Seitenansicht und eine schematische Draufsicht eines einachsigen Anhängers;

Figuren 3 und 4 je eine Draufsicht auf den Anhänger nach den Figuren 1 und 2 im Gespann mit einer Zugmaschine, einmal in der Lenkstellung bei einer Linkskurve und zum anderen in der Lenkstellung bei einer Rechtskurve;

Figur 5 ein zweites Ausführungsbeispiel eines Gespannes mit einem Anhänger, dessen Räder einzeln schwenkbar an dem Anhängerchassis angeordnet sind.

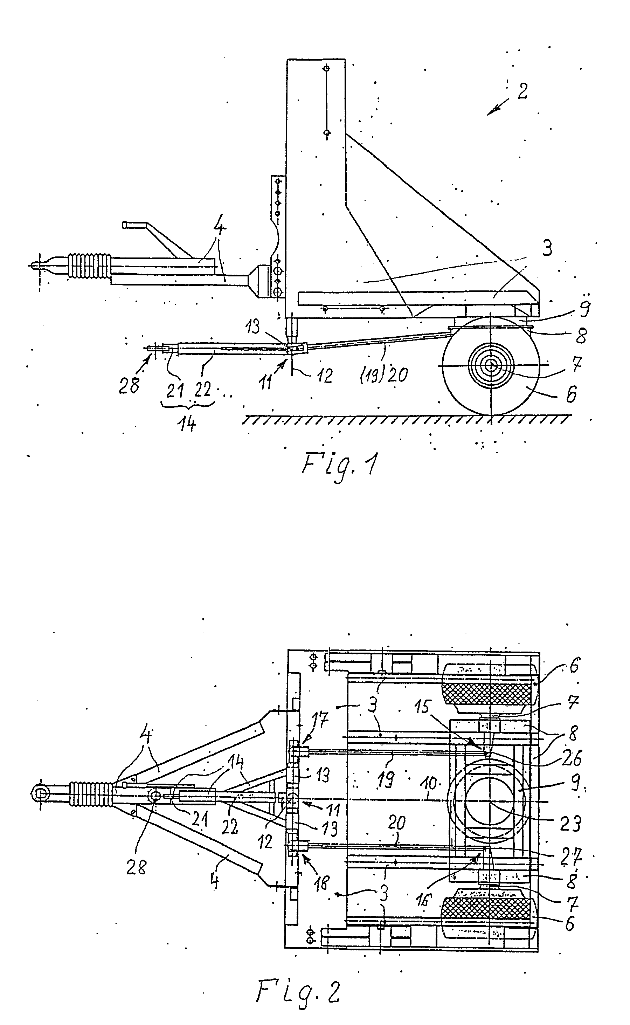

Das in den Figuren 1 bis 4 wiedergegebene Ausführungsbeispiel eines Bodenflächen-Bearbeitungsgerätes weist ein Gespann aus einer Zugmaschine 1 und einem Anhänger 2 auf, dessen Anhängerchassis 3 über eine Deichsel 4 in üblicher Weise an den Deichselgelenkanschluß 5 der Zugmaschine 1 angeschlossen ist. Diese Deichsel 4 dient der Übertragung von Zugkräften und gegebenenfalls von der Zugmaschine ausgehenden Bremskräften, insbesondere dann, wenn die Räder 6 des Anhängers nicht mit einer eigenen von der Zugmaschine 1 ausgesteuerten Bremseinrichtung versehen sind. Die Räder 6 des einachsigen Anhängers 2 sind um einzelne Laufachsen 7 drehbar gelagert, die ihrerseits an einem Lenkrahmen 8 festgelegt sind, der seinerseits über einen sogenannten, üblichen Lenkkranz 9 an dem Anhängerchassis 3 abgestützt ist. Die hinsichtlich der Gebrauchslage des Anhängers etwa vertikal ausgerichtete Drehachse 23 des Lenkkranzes 9 liegt in der vertikalen Längsmittelebene 10 des Anhängers 2. Die Laufachsen 7 sind aufgrund ihrer festen Anordnung an dem Lenkrahmen 8 stets und unabhängig von der Lenkstellung in fluchtender Ausrichtung zueinander gehalten.

In einem in Vorwärtsfahrtrichtung vor dem Lenkrahmen und nach dem Ausführungsbeispiel etwa im Frontbereich des Anhängerchassis 3, an dem die Deichsel 4 festgelegt ist, befindet sich ein Hebelgelenk 11, dessen Schwenkachse 12 in der vertikalen Längsmittelebene 10 des Anhängers 2 gelegen ist. Um diese Schwenkachse 12 drehbar ist an dem Hebelgelenk 11 der Mittelbereich eines geraden, zweiarmigen ersten Gelenkarmes 13 angeordnet, mit dem einstückig ein zweiter Gelenkarm 14 ausgebildet ist, der sich in Geradeaus-Vorwärtsfahrtrichtung in der vertikalen Mittelebene 2 des Anhängers 4 auf die Zugmaschine 1 zu erstreckt. An dem Gelenkrahmen 8 sind beidseits der vertikalen Symetrieebene 10 des Anhängers 2 Gelenke 15 und 16 angeordnet, die mit den jeweils zur gleichen Seite hin abragenden Enden 17 bzw. 18 jeweils über Steuerstangen 19 bzw. 20 gelenkig verbunden sind, die sich in jeder Verschwenklage des Lenkrahmens 8 und damit des parallel zu den Laufachsen 7 verlaufenden Gelenkarmes 14 beidseits der vertikalen Längsmittelebene 10 des Anhängers 2 parallel erstrecken. Da die Längsachse des zweiten Hebelarms 14 senkrecht zur Längsachse des zweiarmigen Hebelarms 13 verläuft, weist die Laufrichtung der Räder 6 immer in Längsrichtung des zweiten Hebelarms 14.

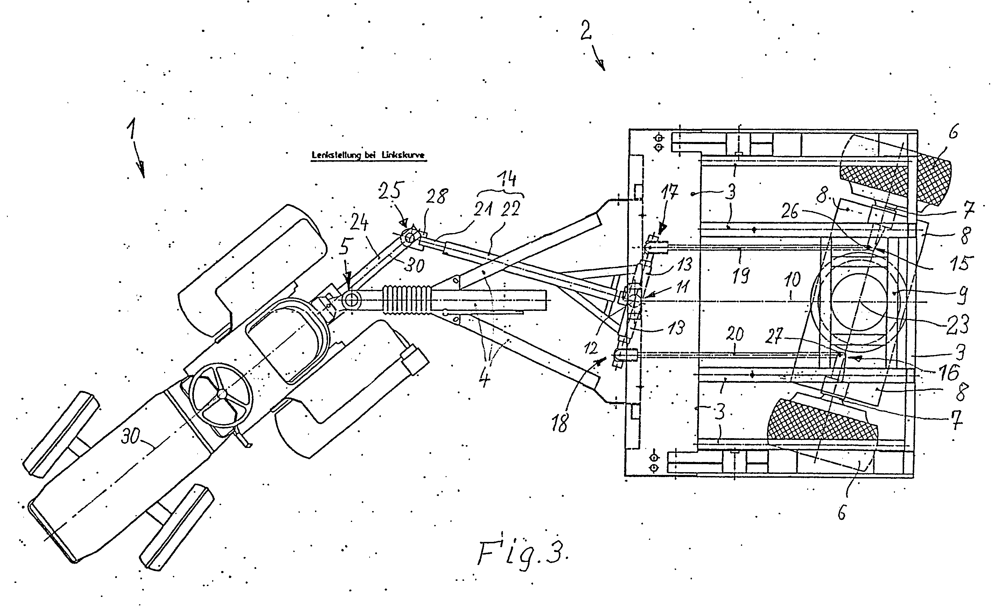

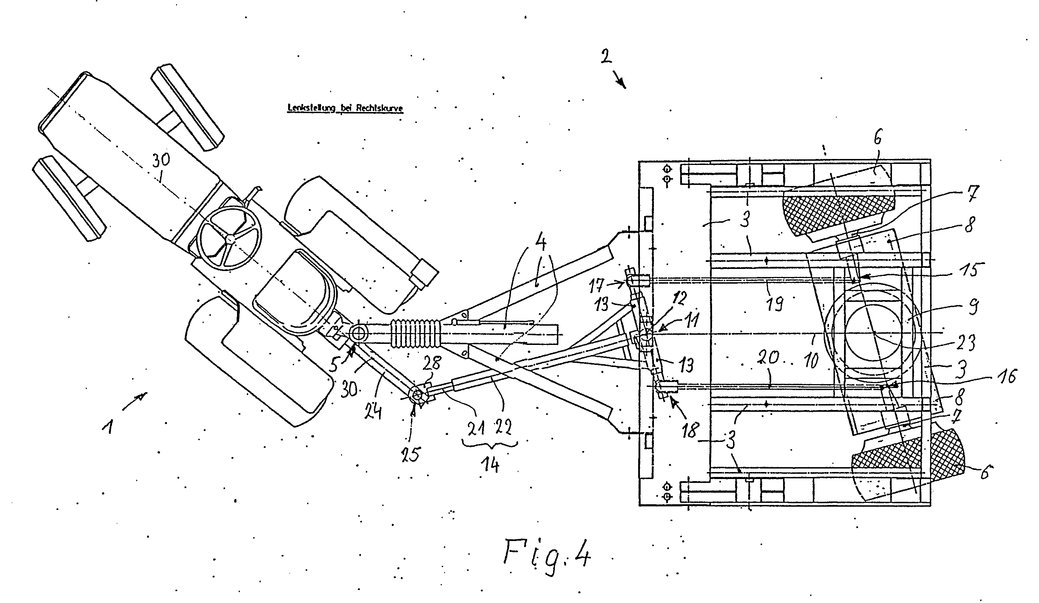

Das der Zugmaschine zugewandte Ende 28 des zweiten Hebelarms 14 ist an einen mit der Zugmaschine 1 fest verbundenen Ausleger 24 angeschlossen, und zwar an dessen der Zugmaschine 1 abgewandten Gelenkende 25, das zusammen mit dem Ende 28 des zweiten Hebelarmes 14 ein sphärisches Gelenk (Kugelgelenk) bildet, das im Rahmen der Bodenunebenheiten sicherstellt, daß der Anhänger unabhängig von der Zugmaschine mit seinen Rädern 6 auf dem befahrenen Boden abgestützt ist. Der Ausleger 24 erstreckt sich von der Zugmaschine aus gesehen in deren vertikaler Längsmittelebene 13 in Rückwärtsfahrtrichtung, und zwar verhältnismäßig weit über den Deichselgelenkanschluß 5 hinaus, wie dies aus den Figuren 3 und 4 ersichtlich ist. Auf diese Weise wird es möglich, die Gelenkarmausbildung 13, 14 gegenüber dem von der Deichsel 4 in Position zur Zugmaschine 1 gehaltenen Anhängerchassis 3 zu verschwenken, so daß der Anhänger in Richtung von der Zugmaschine 1 vorgegebenen Kurvenbahn nachläuft.

Bei dieser Anordnung ist es erforderlich, den zweiten Hebelarm 14 selbsttätig längenveränderlich auszubilden, was im vorliegenden Fall durch eine Teleskoprohranord nung 21, 22 sichergestellt ist. Wird nämlich die Zugmaschine aus den in den Figuren 3 und 4 ersichtlichen Kurvenlagen in die Geradeausfahrtrichtung gesteuert, so verkürzt sich die Gesamtlängenausdehnung des zweiten Hebelarms 14 und des Auslegers 24 entsprechend. Eine solche Längenveränderlichkeit läßt sich natürlich im Rahmen des Auslegers 24 vorsehen.

Wie bereits in der allgemeinen Lösungsbeschreibung angesprochen, läßt sich der zweiarmige Hebelarm 13 auch als nur einarmiger Hebelarm ausbilden, der über die an seinem Ende, beispielsweise 17, über nur eine Steuerstange 19 mit nur einem Gelenk 15 um dessen Gelenkachse 26 verschwenkbar verbinden, oder das Ende 18 über eine Gelenkstange 20 mit dem Gelenk 16, das um seine Gelenkachse 27 verschwenkbar ist. Des weiteren ist es - wie ebenfalls in der allgemeinen Lösungsbeschreibung angeführt - möglich, einen seitlich abragenden Ausleger vorzusehen, wie er im Rahmen des zweiten Ausführungsbeispieles gemäß Figur 5 vorgesehen ist, und dessen zur einen Seite hin gelegenes Gelenkende über eine Steuerstange mit einem auf der anderen Seite der vertikalen Längsmittelebene 10 des Anhängers gelegene Gelenk zu verbinden, so daß die Steuerstange die vertikale Längsmittelebene des Anhängers kreuzt. Damit entfällt die Gelenkarmausbildung des Ausführungsbeispieles nach den Figuren 1 bis 4. Eine solche Lösung wäre insbesondere bei leichteren Anhängern zu verwirklichen.

Das zweite Ausführungsbeispiel ist in Figur 5 nur als Draufsicht in der Geradeausfahrstellung einer Zugmaschine 1 und eines Anhängers 32 dargestellt, dessen Anhängerchassis 33 über eine daran befestigte Deichsel 34 in bekannter Weise mit dem sphärisch ausgebildeten Deichselgelenkanschluß 35 der Zugmaschine 1 verbunden ist. Die Räder 36 des verhältnismäßig leichter und/oder kleiner ausgebildeten Anhängers 32 sind um getrennte Laufachsen 37 drehbar jeweils für sich in gabelförmigen Konsolen 38 und 39 gehalten, die ihrerseits jeweils um eine etwa vertikal verlaufende Achse 48 verschwenkbar an dem Anhängerchassis 33 gelagert und verschwenkbar abgestützt sind. Die beiden Konsolen 38 und 39 sind jeweils in den Seitenbereichen des Anhängerchassis 33 angeordnet, und zwar mit gleichem Abstand von der vertikalen Längsmittelebene 40 des Anhängers 32. Die beiden Konsolen sind durch eine Spurstange 41 verdrehstellungssynchronisiert miteinander verbunden, die an ihren beiden Enden an Gelenkstellen 42 und 43 der Konsolen 38 und 39 angelenkt ist, welche in Vorwärtslaufrichtung der Räder 36 jeweils vor den Achsen 48 der Konsolen 38 und 39 an diesen vorgesehen sind. An der einen Konsole 39 ist ein zur vertikalen Längsmittelebene 40 des Anhängers 32 hin abragender Mitnehmer 46 fest angeordnet, an dessen der zugehörigen Konsole 39 abgewandten Ende ein Gelenk 47 vorgesehen ist, das über eine Steuerstange 49, 50 mit dem sphärischen Gelenkende 45 eines Auslegers 44 in Verbindung steht, der von der vertikalen Längsmittelebene 30 der Zugmaschine 1 an dieser festgelegt zur selben Seite wie die den Mitnehmer aufweisende Konsole abragt. Es ist aus Figur 5 ohne weiteres vorstellbar, daß bei Kurvenfahrt der Zugmaschine 1 die Räder 36 über die Steuerstange 45, 50 und die Spurstange 41 beide derart verschwenkt werden, daß der Anhänger der Kurvenspur der Zugmaschine 1 folgt. Durch Wahl der Länge des Auslegers 44 und/oder des Mitnehmers 46 läßt sich der Nachlauf des Anhängers 32 mehr oder weniger genau der Kurvenspur der Zugmaschine 1 anpassen.

Die Steuerstange ist längenveränderlich einstellbar aus zwei teleskopartig ineinander verschiebbaren Teilen 49 und 50 zusammengesetzt, so daß eine exakte Justierung erfolgen kann, die sich am Geradeauslauf des Gespannes orientiert. Ähnlich Justiermöglichkeiten können beispielsweise im Bereich der Steuerstangen des ersten Ausführungsbeispieles ebenfalls vorgesehen sein.

Auch beim zweiten Ausführungsbeispiel gemäß Figur 5 kann eine symetrische Anordnung derart getroffen werden, daß der Ausleger doppelarmig mit nach beiden Seiten der vertikalen Längsmittelebene 30 der Zugmaschine 1 gelegenen Gelenkenden ausgebildet ist und jedes der Gelenkenden über je eine zugeordnete Steuerstange mit den Gelenken der Konsolen verbunden ist, wobei beide Konsolen spiegelsymmetrisch mit einem Mitnehmer versehen sind, die Spurstange 41 ist dann entbehrlich.

Anhand des zweiten Ausführungsbeispieles gemäß Figur 5 läßt sich auch ohne weiteres die in der allgemeinen Lösungsbeschreibung aufgezeigte Möglichkeit erläutern und ersehen, durch Verschwenken des Auslegers 44 in einer etwa vertikalen Ebene, die leicht geneigt zur vertikalen Längsmittelebene 30 der Zugmaschine 1 verläuft, eine in Abhängigkeit von der Kurvenfahrt der Zugmaschine 1 entgegengesetzte Verschwenkung der Räder 36 des Anhängers 32 zu erreichen, dann nämlich, wenn der Ausleger 44 derart durch die vertikale Längsmittelebene 30 der Zugmaschine 1 verschwenkt wird, das sein Gelenkende 45 auf die andere Seite dieser Längsmittelebene 30 gelangt. Die Verschwenkebene des Auslegers 44 ist dabei derart leicht geneigt zur Ebene 30 anzuordnen, daß in beiden Verschwenklagen bei gleichbleibender Länge der Steuerstange 49, 50 der spurgetreue Nachlauf des Anhängers 32 bei Geradeausfahrt der Zugmaschine 1 erreicht wird. Diese zum Kurvenverlauf der Zugmaschine 1 entgegengesetzte Verschwenkung der Räder 36 hat zur Folge, daß sich der Anhänger praktisch in einer zur Kurve der Zugmaschine 1 parallelen Kurve versetzt, wodurch es möglich wird, auf engerem Raume einzuparken oder Rangiermanöver entsprechend vielseitiger durchzuführen. Bei einer solchen Gegenverschwenkung der Räder 36 kreuzt die Steuerstange 49, 50 die vertikale Längsmittelebene 40 des Anhängers 32. Eine solche Umsteuerung der Verschwenkrichtung der Räder läßt sich auch in Rahmen des ersten Ausführungsbeispieles dann vornehmen, wenn dieses - wie dort geschildert - mit einem seitlich abstehenden Ausleger und einer bis zum Lenkrahmen durchgehenden Steuerstange versehen ist.

**Ansprüche**

1. Bodenflächen-Bearbeitungsgerät mit einem Gespann aus einer Zugmaschine (1) und einem an diese über eine Deichsel (4) angeschlossenen Anhänger (2; 32), der zwei bei Geradeausfahrt um fluchtend ausgerichtete Laufachsen (7; 37) drehende, gegenüber dem Anhängerchassis (3; 33) in etwa horizontaler Ebene verschwenkbare Räder (6; 36) aufweist,
**dadurch gekennzeichnet,**
daß an der Zugmaschine (1) ein Ausleger (24; 44) fest angeordnet ist, der über ein gelenkig zwischengeschaltetes Lenkgestänge (7 bis 22, 25; 37 bis 43, 45 bis 50) mit den schwenkbaren Rädern (6; 36) des Anhängers (2; 32) diese bei Kurvenfahrt in Richtung des Kurvenverlaufs einstellend in Verbindung steht.

2. Gerät nach Anspruch 1,
**dadurch gekennzeichnet,**
daß die beiden Räder (6) an einer gemeinsamen Laufachse oder an in jeder Verschwenklage in fluchtender Ausrichtung bleibenden Einzellaufachsen (7) gelagert sind, die an einem Lenkrahmen (8) gehalten ist bzw. sind, der über einen Lenkkranz (9) um eine etwa vertikale, in der vertikalen Längsmittelebene (10) des Anhängers (2) liegende Drehachse (23) verschwenkbar an dem Anhängerchassis (3) abgestützt ist und der wenigstens ein Gelenk (15, 16) aufweist, dessen Gelenkachse (26, 27) etwa vertikal und von der Drehachse (23) des Lenkkranzes (9) seitlich beabstandet ist und das über eine ein- oder mehrteilige Gelenkstangenverbindung (11 bis 14, 19, 20) an das vom Zugfahrzeug (1) abstehende Gelenkende (25) des Auslegers (24) angeschlossen ist.

3. Gerät nach Anspruch 2,
**dadurch gekennzeichnet,**
daß in Vorwärtsfahrtrichtung vor der Drehachse (23) des Lenkrahmens (8) ein Hebelgelenk (11) angeordnet ist, dessen Schwenkachse (12) in der vertikalen Längsmittelebene (10) des Anhängers (2) liegt und an dem wenigstens zu der einen Seite von dieser Längsmittelebene (10) abragend ein erster Hebelarm (13) schwenkbar angeordnet ist, an dessen von dem Hebelgelenk (11) beabstandetes Ende (17 bzw. 18) eine Steuerstange (19 bzw. 20) angelenkt ist, die an das Gelenk (15 bzw. 16) des Lenkrahmens (8) angeschlossen ist, das zu derselben Seite hin wie der Hebelarm (13) von der vertikalen Längsmittelebene (10) des Anhängers (2) beabstandet ist, und daß an dem Hebelgelenk (11) ein mit dem ersten Hebelarm (13) starr verbundener zweiter Hebelarm (14) angeordnet ist, der in Geradeausfahrtrichtung in der vertikalen Längsmittelebene (10) des Anhängers (2) von dem Hebelgelenk (11) in Vorwärtsfahrtrichtung abragt und mit seinem dem Hebelgelenk (11) abgewandten Ende (28) an das von der Zugmaschine (1) abragende Gelenkende (25) des Auslegers (24) angelenkt ist, der sich in der vertikalen Längs mittelebene (30) der Zugmaschine (1) in Rückwärtsfahrtrichtung über den Deichselgelenkanschluß (5) der Zugmaschine (1) hinaus erstreckt.

4. Gerät nach Anspruch 3,
**dadurch gekennzeichnet,**
daß der erste Hebelarm (13) sich geradlinig zu beiden Seiten der vertikalen Längsmittelebene (10) des Anhängers (2) und parallel zur Laufachse (7) der Räder (6) erstreckt und in seinem Mittelbereich an dem Hebelgelenk (11) gehalten ist, daß beidseits der vertikalen Längsmittelebene (10) des Anhängers (2) je ein Gelenk (15, 16) mit gleichem Abstand von der Drehachse (23) des Lenkrahmens (8) an diesem angeordnet ist und daß jeweils ein von dem Hebelgelenk (11) abgewandtes Ende (17, 18) des ersten Hebelarms (13) mit dem auf derselben Seite der vertikalen Längsmittelebene (10) des Anhängers (2) gelegenen Gelenk (15, 16) des Lenkrahmens (8) über eine Steuerstange (19, 20) gelenkig verbunden ist, so daß die beiden Steuerstangen (19, 20) spiegelsymmetrisch zur vertikalen Längsmittelebene (10) des Anhängers (2) und in jeder Lenkstellung parallel verlaufen.

5. Gerät nach Anspruch 3 oder 4,
**dadurch gekennzeichnet,**
daß der Ausleger (24) oder der zweite Hebelarm (14) längenveränderlich, insbesondere nach Art eines Teleskoprohres (21, 22), ausgebildet ist.

6. Gerät nach Anspruch 2,
**dadurch gekennzeichnet,**
daß das Gelenk des Lenkrahmens über eine Gelenkstange mit dem frei abragenden Gelenkende des Auslegers verbunden ist, der aus der vertikalen Längsmittelebene der Zugmaschine zu der einen Seite hin abragend angeord net ist, während das Gelenk des Gelenkrahmens zu der anderen Seite hin von der vertikalen Längsmittelebene des Anhängers beabstandet ist.

7. Gerät nach Anspruch 6,

**dadurch gekennzeichnet,**

daß an dem Lenkrahmen zwei symetrisch zur vertikalen Längsmittelebene des Anhängers von dieser gleich beabstandete Gelenke vorgesehen sind, daß der Ausleger zu beiden Seiten der vertikalen Längsmittelebene der Zugmaschine abragend und mit von dieser gleich beabstandeten Enden ausgebildet ist und daß zwei Gelenkstangen vorgesehen sind, die die Enden des Auslegers über Kreuz mit den Gelenken des Gelenkrahmens gelenkig verbinden.

8. Gerät nach Anspruch 1,

**dadurch gekennzeichnet,**

daß jedes der beiden Räder (36) für sich an einer Konsole (38, 39) gelagert ist, deren jede um eine eigene, etwa vertikal verlaufende Achse (48) verschwenkbar in jeweils einem der Seitenbereiche des Anhängerchassis (33) verschwenkbar gelagert ist und deren eine - gegebenenfalls über einen seitlich abragenden Mitnehmer (46) - ein in Richtung auf die vertikale Längsmittelebene (40) des Anhängers (32) zu von der Achse (48) beabstandetes Gelenk (47) aufweist, das über eine Steuerstange (49, 50) an das von der vertikalen Längsmittelebene (30) der Zugmaschine (1) abgewandte Gelenkende (45) des zur Seite dieser Konsole (39) hin abragend an der Zugmaschine (1) befestigten Auslegers (44) angelenkt ist, und daß die beiden Konsolen (38, 39) an in Fahrtrichtung vor den Achsen (48) der Konsolen (38, 39) angeordneten Gelenkstellen (42, 43) mittels einer Spurstange (41) verschwenkstel lungssynchronisierend gelenkig miteinander verbunden sind oder daß beide Konsolen spiegelsymetrisch zur vertikalen Längsmittelebene des Anhängers mittels je einer Steuerstange mit von der vertikalen Längsmittelebene der Zugmaschine beidseitig gleich beabstandeten Enden eines entsprechend zweiarmig ausgebildeten Auslegers gelenkig verbunden sind.

9. Gerät nach einem der Ansprüche 6 bis 8,

**dadurch gekennzeichnet,**

daß der Ausleger unter Berücksichtigung einer gleichbleibenden Steuerstangenlänge von der einen Seitenlage in die andere umlegbar ausgebildet ist, so daß die Räder des Anhängers in die Gegenkurvenrichtung gesteuert sind.

10. Gerät nach einem der Ansprüche 1 bis 9,

**dadurch gekennzeichnet,**

daß die Stangen (49, 50) des Lenkgestänges (7 bis 22, 25; 37 bis 43, 45 bis 50) hinsichtlich ihrer Länge justierend einstellbar sind.

Fig. 1

Fig. 2

Fig. 3

Lenkstellung bei Rechtskurve

Fig. 4

EP 0 350 008 A2

Fig. 5